# EUROPEAN PATENT APPLICATION

(11) **EP 1 271 362 A2**
(43) Date of publication of application: **02.01.2003**
(21) Application number: 02394074.5
(22) Date of filing: 20.06.2002
(51) Int. Cl.: G06F 17/30

(54) **A method of handling a data request**

(30) Priority: 20.06.2001 US 884448
(71) Applicant: Navarasoft Limited, County Clare (IE)
(72) Inventor: Wolfel, Ludger, 44328 Dortmund (DE); Kuschke, Michael, 44141 Dortmund (DE); Timmermann, Andreas, c/o Materna GmbH, 44026 Dortmund (DE)
(74) Representative: O'Connor, Donal Henry

(57) **Abstract**

A method of handling a data request by exporting data from at least one database to at least one receiver via an intermediary server, the intermediary server comprising at least one database adapter and a memory buffer for temporary storage of data, the method including the steps of transmitting a data request to the database, retrieving the data from the database and assigning it with a unique ID, transmitting the data and the unique ID to the intermediary server, passing the data through the database adapter to transform the data into receiver readable format and transmitting the transformed data and unique ID number to the receiver when the receiver is next enabled to receive the data. There is furthermore provided a computer implemented system for accessing databases operated by independent electronic processing devices.

## Description

### Introduction

This invention relates to the field of data distribution and in particular to a method of handling a data request by exporting data from at least one database to at least one receiver via an intermediary server.

At present, data may be stored in many different formats and database applications are stored in distributed storage media. When electronic data processing was in its infancy, companies developed highly different in-house database formats and approaches. Not only was there a difference in the individual format and approach from company to company but there also existed differences in the format and approach in database applications in companies having more than one database. There developed a need for companies to be able to supply information to its workforce from a number of different databases with each database having its own individual format.

There exists numerous different technologies available today to allow variable access to the different database formats. One solution to the problem is to provide a specific interface for each company application that must be accessed. This has the disadvantage that not only do the specific interfaces take up valuable time and resources to develop and maintain, but the staff must become familiar with a number of different application interfaces which requires further time and expenditure on training. Heretofore, this solution has been found to be unsatisfactory and several other approaches have been taken to provide a more comprehensive solution.

One such approach taken by Microsoft Corporation [Registered Trade Mark] are their interface systems OLE DB (Object Linking and Embedding Database) and ODBC (Open Database Connectivity). These interface systems allow different applications to share information from the same database and for different applications to access the same databases. They allow the user to export data from various relational and non-relational data sources and import that data into these databases. By using these interface techniques, it is relatively simple to link new applications to existing databases and platforms. It permits uniform access to highly different data and database formats.

In addition, there exists a UN standard for exchanging structured information between different organisations and companies in the fields of administration, commerce and transportation. This standard is termed EDIFACT (Electronic Data Interchange for Administration, Commerce and Transport). Converters are used in this standard that extract information from business applications and transfer it into the standardised form of EDIFACT. These converters are also used to transfer this information to the corresponding recipients.

In addition, the CORBA system (Common Object Request Broker Architecture) exists that was presented in 1991 by Object Management Group (OMG). CORBA allows communication between a wide variety of applications at separate locations. CORBA defines data-transmission-neutral exchange formats for the different linked applications. The image of the format is done automatically. Changing the format means that the application must be redesigned and reconverted. CORBA is focused on distributing and finding information.

A further disadvantage of the systems already described is that the applications must be linked directly and statically to the databases or other applications and they have to be recreated or the assigned links must be redefined when structures change. With today's mobile workforce, this can be not only prohibitive but impractical also. With mobile workforces, having direct static links are undesirable. Another disadvantage of the above-mentioned systems is that data from a database can only be accessed if the database permits immediate access to the user and furthermore, data may only be sent from the database to the respective client application if it is directly linked to that database. Consequently, the proposed solutions have been largely unsatisfactory due to relatively high cost and linking requirements.

Therefore, it is an object of the present invention to provide a method of handling a data request to exchange information between a database and a receiver without the receiver having to be permanently connected to the database.

### Statements of Invention

In accordance with the present invention, there is provided a method of handling a data request by exporting data from at least one database to at least one receiver via an intermediary server, the intermediary server comprising at least one database adapter and a memory buffer for temporary storage of data, the method comprising the steps of transmitting the data request to the database and retrieving the requested data from the database characterised in that the method further comprises transmitting the data request from the intermediary server; assigning to the data a unique ID number; transmitting the requested data and unique ID number to the intermediary server; passing the requested data through the relevant database adapter to transform the data into receiver readable format and storing the transformed data and unique ID number in the memory buffer; enabling the receiver in accordance with a preset condition precedent; transmitting the transformed data and unique ID number to the receiver when the receiver is next enabled to receive the data on the condition precedent occurring.

By using the above method, the receiver need not be connected to the database permanently. Any number of adapters may be provided at the intermediary server for the transformation of data from the databases so that access to any number of databases is possible for the receiver. The receiver may download the data from the intermediary server the next time it connects to the intermediary server which could be the preset condition precedent. The unique ID is shared between the databases, the intermediary server and the receiver, so that they all can identify the data being transferred. Further, the intermediary server may send data requests to the database at regular intervals, stores the updated data in the memory buffer and transmits the updated data on the condition precedent occurring. By having up-to-date information on its memory buffer, it may provide receivers with that up-to-date information that is already in its memory buffer without having to request the information from the database. Further, on the intermediary server requesting data from a database, data with a unique ID is compared with the corresponding data in the database; the data which has been updated Is extracted from the database; and the extracted data is written to the data in the memory buffer having the unique ID. This cuts down on communication traffic. The database or the intermediary server may request that such comparison take place.

Additionally, in this method, when data having a unique ID in the database is changed, the database sends a signal to the intermediary server and the intermediary server requests the extracted data in accordance with predetermined rules for operation of the intermediary server. The predetermined rules may be based on one or more of:-
predetermined time intervals;
the data ID;
a request from the receiver; and
type or class of receiver.

The unique ID number may identify the respective database or alternatively it may represent the information itself or indeed a combination of the two. The ID number may contain a destination address. Again, by using this method, the data may be tracked as it passes through the system.

In another embodiment of the invention, the condition precedent is based on predetermined time intervals. Alternatively, the data request may originate at the receiver. When the receiver desires information, it may request data from the database via the intermediary server. It may do so at predetermined regular intervals.

By way of the method according to the invention, it is possible to couple any electronic data processing (EDP) application with another. Different business applications often fundamentally differ as to how they offer information to other applications. Frequently, this cannot be done directly. Corresponding interfaces can be designed as so-called application programming interfaces (APIs) or database interfaces. Just as access interfaces differ, the presentation formats of data differ that are used in business applications. The presentation formats of data are hence to be viewed as information from databases that is to be exchanged between the individual business applications or between a database and a client application. The procedure according to the invention is also suitable for this transfer of the presentation data.

Since the data records from business applications are advantageously buffered, the data records in the databases do not have to be blocked or locked. By means of a suitable data synchronisation process, the data or information and its structure and presentation is always kept current in the server or its assigned memory. The data is imported into the database on the database controllers request.

In a still further embodiment of the invention, the data may be altered at the receiver and retransmitted back to the database via the intermediary server. It may be temporarily stored in the memory buffer of the intermediary server until such time that the database requests the updated data from the intermediary server. This updated data may be made readily available to other receivers who may wish to download the data to obtain the most up-to-data version. In this way, it may be seen that the method according to the invention uses prior art technologies to transform and transmit static information from different applications. The method according to the invention is, however, also able to exchange dynamic information between the databases and the receivers. The procedure can also be viewed as an application adapter which is connected between the databases and at least one receiver or the client application(s) that it uses.

By dynamic information, we mean information that is subject to change, for example, by insertion or changing of a data record. This information must be offered to the respective receivers.

Given this flexible design of the method according to the invention, structured and unstructured data can be easily processed using prior art technologies and interfaces or access technologies to access data in relational databases or e.g. E-mail applications. The present procedure offers a universal technology that unifies technologies that are usually limited to a special field. It is also easy to assign and send information to other components. During processing of information, it is often necessary to process or provide information from other applications. The method according to the invention can also be used in this case as well.

When information is read out of databases, the metadata of the database are transformed into a uniform metadata model. The transformed data in the uniform metadata model are buffered with an individual ID and presented for transmission to the respective receiver. The receivers can connect at any time to the intermediary server and the connected memory buffers. After connecting, the respective information is transmitted to the receiver. Then the receiver can be disconnected from the intermediary server and the information can be changed when the server is disconnected, or new information can be created based on the structures of existing information. If the receiver is connected to the intermediary server again, only the information that was changed or added is transmitted to the electronic device and then sent to the respective database. When sending data from the intermediary server to the respective database, the data is retransformed and the procedure automatically harmonises the structures or generates a signal if the harmonisation fails. If data is not transferred successfully, it is not deleted from the sending entity's memory. An administrator can return the information to the respective database manually and no information is lost. This ensures greater reliability and security for the data in the database.

As already stated, information is saved in databases in a structured form or in unstructured data sources. With E-mail systems, the structure e.g. consists of the information units "sender", "receiver", "subject" and "text". This description of the information units is termed metadata in the following. In the example of E-mail, the metadata are static. With databases for a delivery system, the metadata are changeable. There are three types of changes in metadata, namely:
1. the generation of new metadata (creation of a new table in the database),
2. the change of existing metadata (addition, deletion or change in a table), and
3. the deletion of existing metadata (deletion of a table or database).

It is also advantageously possible to define, as stated above, a type or class of receiver or a profile for a receiver ( or a group of receivers) so that they are all updated at the same time or so that specific information is automatically transmitted to the group from specific databases, and the current information from the database is always available to the receivers. The groups may be updated at regular intervals or any time the data in the database changes. It is possible to link information from specific databases to information of the same or different database so that when data is exported, additional information from other databases is also read out and simultaneously transmitted to the respective receiver.

It is also possible for databases to automatically transmit changed information to adapters using a notification mechanism. It is possible to send messages or notifications to the server or adapter and not the information itself so that the server or adapter can export the information from the respective database when it is ready to do so. It is also possible to set up the adapter so that it will examine databases at specific intervals. If the data has changed, it is exported and saved to be sent to receivers linked with this data. In addition, the method can offer form layouts and form structure data to be processed in a form design tool so that the form layout and structure data can also be buffered up-to-data, and the client applications can be automatically adapted to the changed form layouts and structure data of the respective database or uniform metadata model. Such form layout data can also be generated and saved on the intermediary server in the process according to the invention and transmitted as needed to the respective client application. The procedure or adapter according to the invention can monitor information and its status changes. A status change is understood to be the generation of new information or the change and deletion of existing information.

In another embodiment of the invention, there is provided a computer implemented system for accessing databases operated by independent electronic processing devices comprising:-
(a) a plurality of receivers;
(b) an intermediary server;
(c) a communications network connecting the processing devices and the server and the receivers, at least the receivers and the server being only intermittently connected;
(d) translation means in the server to accept data from the database and convert the accepted data into a format suitable for transmission to the receiver;
(e) means to assign a unique ID to data in a database on accepting data from the database;
(f) a storage buffer for the ID and converted data; and
(g) means on the receiver being enabled to communicate with the server, downloading the data and ID to the receiver.

The system described above is seen as suitable for the distribution of data from at least one database to a receiver that is not permanently linked with the database. Such a system can provide added security to data integrity when data is being exchanged amongst receivers and databases. It is understood that the receiver on the intermediary server may be provided with means to request data from the databases. They may have means to request data at predetermined intervals and the receiver may be provided with means to alter data and retransmit that altered data back to the intermediary server. A system of this kind could have a fully updated dynamic database that is available to any number of mobile receivers.

With this computer implemented system, the intermediary server is provided with means to request data from the database at predetermined intervals. The receiver may additionally be provided with means to request data from the databases at predetermined intervals. Further, the receiver may be provided with means to alter the data and means to retransmit the altered data to the intermediary server.

There is also provided a computer program comprising program instructions for causing a computer program to carry out the above method which may be embodied on a record medium, carrier signal or read-only memory.

### Detailed Description of the Drawings

The invention will be now more clearly understood by way of example only with reference to the accompanying drawings, in which:-
Fig. 1 is a block diagram of an architecture suitable for use in the method according to the invention;
Fig. 2 is a flow diagram for configuring the method according to the invention for the architecture of Fig. 1;
Fig. 3 is a flow diagram of a data request according to the invention;
Fig. 4 is a flow diagram illustrating the request and transfer of data; and
Fig. 5 is a flow diagram illustrating the return of data to a database.

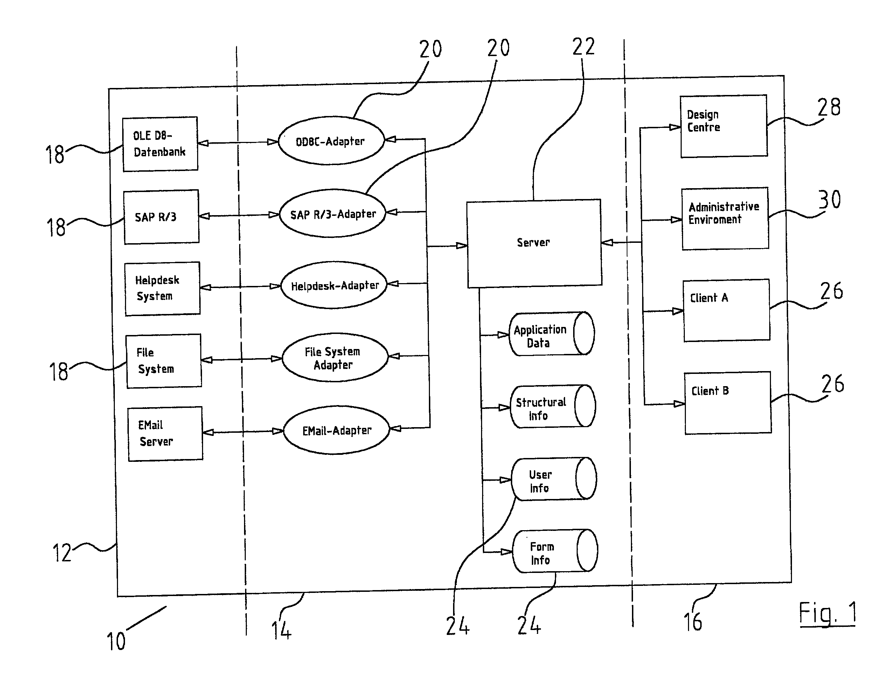

Referring now to the drawings and in particular to Fig. 1, there is provided a block diagram of an architecture suitable for use by the method, indicated generally by the reference numeral 10. The architecture 10 is divided into three distinct stages, a database stage 12, an intermediary server stage 14 and a receiver stage 16.

The database stage 12 further comprises a plurality of databases 18 which include, but are not limited to, an OLE DB, an SAP R.3, a Helpdesk system, a file system and an email server, all operated by processing devices (not shown). The intermediary server stage comprises a plurality of database adapters 20, a session server 22 and memory buffers 24. Each database adapter 20 corresponds to a database 18 in the database stage. The receiver stage 16 comprises a plurality of receivers including but not limited to clients 26, a design centre 28 and an administrative environment 30. The receivers are connected to the session server 22 via a suitable transmission path, most likely a mobile communications network (not illustrated).

A data request is passed from the intermediary server 14 to the database stage 12. Data is retrieved from the appropriate database 18 and given a unique ID number.

The data and ID are transmitted to the intermediary server 16 and the data is passed through the appropriate database adapter 20 that corresponds to the database from which the data originated, i.e. data from an OLE DB databank may be accessed using an ODBC adapter. The data is converted into receiver readable format and the converted data and ID are stored in the memory buffers 24 of the intermediary server, ready for transmission to the receiver at the next available opportunity.

For example, data from a helpdesk system may be required. The data is retrieved from the relevant database and assigned an ID number. The data and ID are then transmitted to the intermediary server, the data being passed through a helpdesk adapter to transform the data from the helpdesk database into a format that is readable by the receiver, which in this case may be a client 26. The transformed data and ID are then stored in the memory buffers of the intermediary server 14 until such a time that the client is able to retrieve the data, i.e. the next time the client connects to the intermediary server 14. When the client downloads the data, the ID is also transmitted to the client. This way, it is possible for the client to return the data received from the server back to the server with any changes/modifications that may have been made along with the same ID number. By keeping the same ID number, the data may be altered before being reconverted into database acceptable format and passed back to the correct database as required. The intermediary server has memory buffers to temporarily store data such as application data, structural information, user information and form information. The whole procedure may be controlled by the intermediary server and in particular the session server 22.

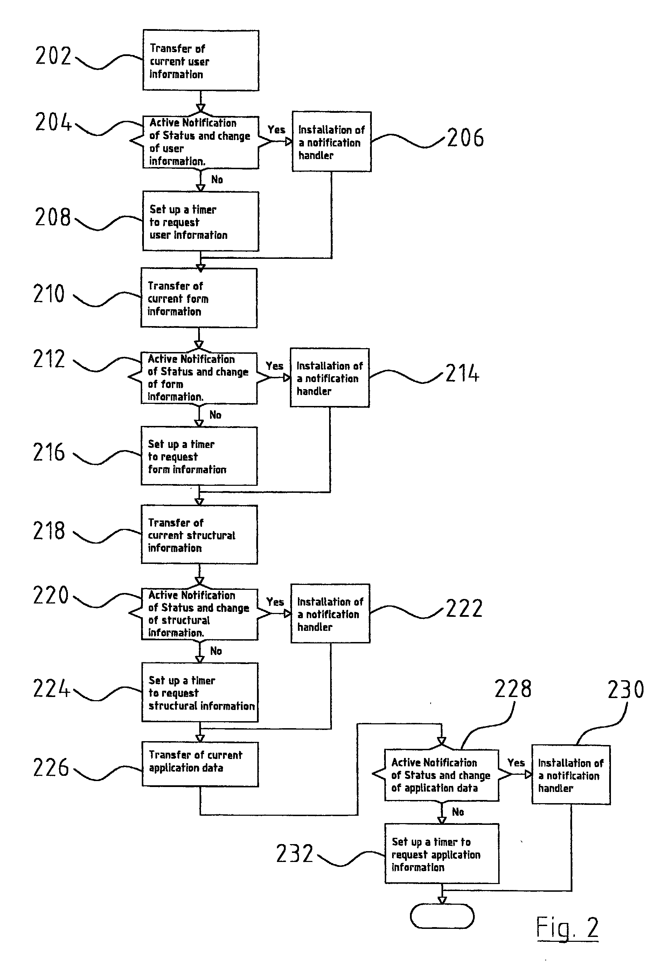

Referring now to Fig. 2, there is shown a flow diagram for configuring the method for the architecture shown in Fig. 1. In step 202, existing metadata in the databases of the database stage are imported via the respective adapter and converted into an internal format. The determined data types are translated into the internal data types of the adapter. Some examples of internal data types are number (int., short, long, byte, word, dword), decimal (float, double), date, time, time stamp, string, blob (binary large object) and compound data types (structures). All data types have attributes that e.g. establish the maximum length in the case of a data type string. The internal format of this information may be, for example, XML. An example of an email metadata is:-
<metadata>
<name>email</name>
<fields>
<field name="sender"type="string"length=80></field>
<field name="receiver"type="string"length=80></field>
<field name="subject"type="string"length=80></field>
<field name="text"type="string"length=32000></field>
<fields>
</metadata>

The metadata may be converted into the internal format either manually or automatically depending on the design and power of the system. Once the user information has been transferred, it is determined, at step 204, whether a notification handler or a timer is to be installed. If a notification handler is to be installed, this may be done at step 206, however, if a timer is to be installed, this may be set up in step 208. If a notification handler is installed, then we have what is called passive monitoring. This is selected when the target application or the information supplier provides a notification mechanism. An application may register as a receiver for notification and if data in the system changes, the registered receiver is notified of the change and may update its data accordingly. A component of the notification may be the ID of the changed information, in which case, the relevant adapter determines and transforms the data and sends it to the server. If a timer is installed, at step 208, we have active monitoring in which case the timer will cause the server to request data from the database at predetermined intervals. By using the above, the user information may be exported from the respective database at specific intervals and compared with the save information. The most current user information is continuously administered and saved by the server. In step 210, the current form information is transferred and at step 212, it is determined whether or not a notification handler is to be installed at step 214 or whether a timer is to be set up at step 216.

A notification handler can only be set up when the respective database can automatically generate a signal when its database changes. The signal informs the server that the database has changed so that the server can then update the information on its memory via the respective adapter. If a corresponding notification system does not exist for the respective database, a corresponding timer can be set up to periodically request the respective information.

In steps 218 to 224, the structural information is initialised. At step 218, the structural information is transferred and at step 220, it is determined whether a notification handler is to be installed at step 222 or whether a timer is to be set up at step 224. Again, this will largely depend on the capabilities of the databases being accessed. Finally, in steps 226 to 232, the application data is initialised by transferring the current application data in step 226, determining whether active notification of status and change of application data is possible and if so, installing a notification handler at step 230. If it is not possible to have active notification, then a timer is set up at stage 232. This concludes the initialisation of the system. The sequence may of course be altered. Once the initialisation procedure has been completed, the data in the databases is monitored for changes.

As mentioned, an ID is generated for each exported information unit that is added to the information unit. This is carried out by any suitable means such as a computer program. If an information unit passes through several changes in status, the procedure ensures that the information unit is always issued the same ID. The ID may be issued by the databases or alternatively by the intermediary server when a piece of data is initially requested.

An example of assigning an ID to an email would be as follows:-

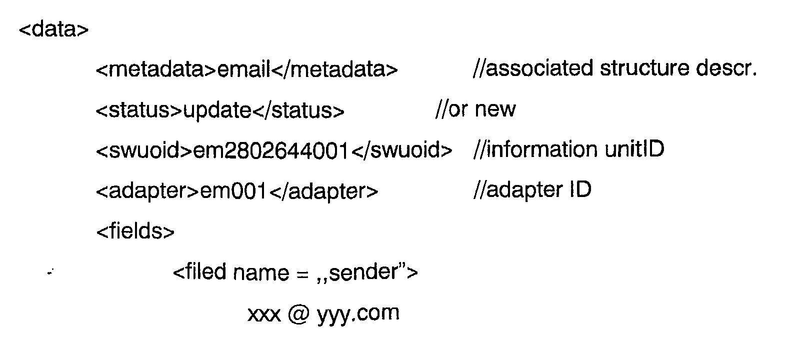

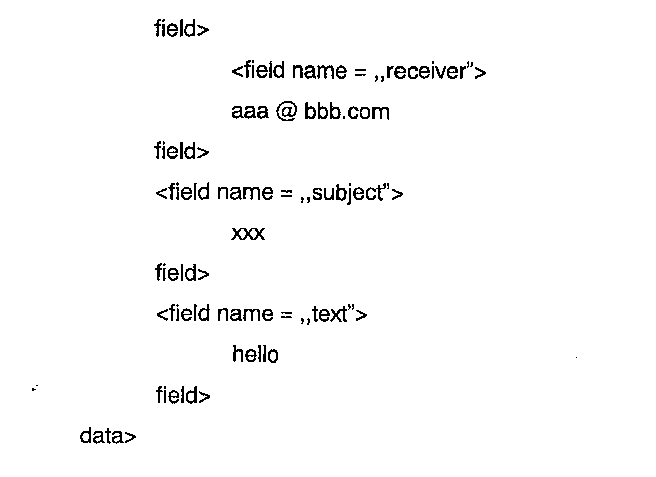

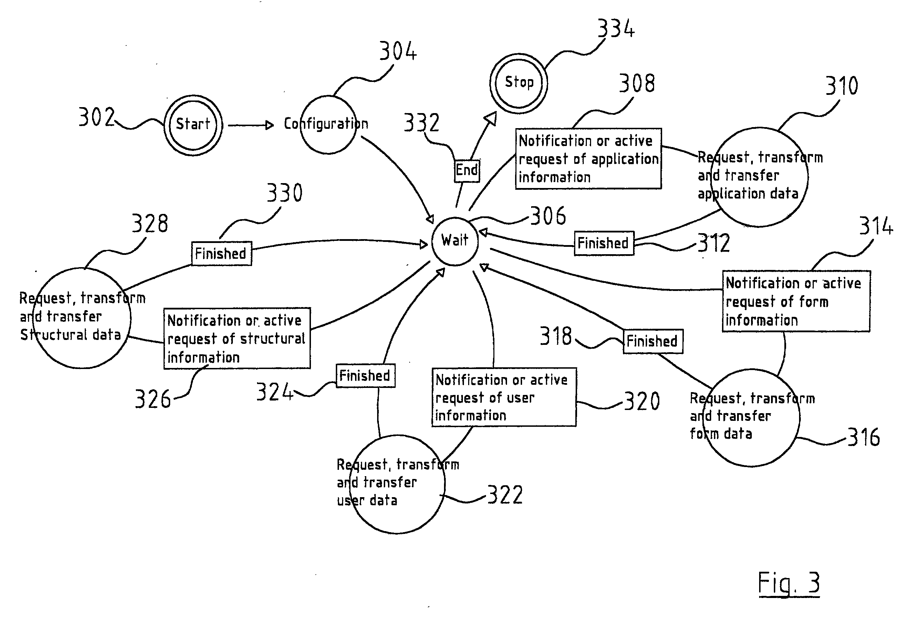

Fig. 3 is a flow diagram of event processing according to the invention. The start of the system is identified at step 302. After the start, the system is configured at 304. The system configuration is shown in Fig. 2 and has already been described. After the system is configured, a wait loop 306 is run until either a timer has run out and the periodic request for information has started, or a notification has been received from a database. Such notifications or active requests for information are shown as steps 308, 314, 320 and 326. These relate to a notification or active request for application information, form information, user information and structural information respectively. These notifications steps proceed a request for data, the transportation and transfer of data steps. The respective information from the database is requested and transformed into receiver readable format. The respective program steps for requesting, transforming and transferring the data subsequent to a notification or active request are identified as steps 310, 316, 322 and 328. For example, if a notification for user information is received at step 320, the information will be requested, transformed into receiver readable format by suitable translation means and transferred to the receiver at step 322 if it is possible to do so at that time. If it is not possible to transfer it directly, it is stored in the server memory buffer. When the transfer is complete and the request is finished, the method proceeds to step 324 before returning back to step 306. When all data has been transferred the system finishes on step 332.

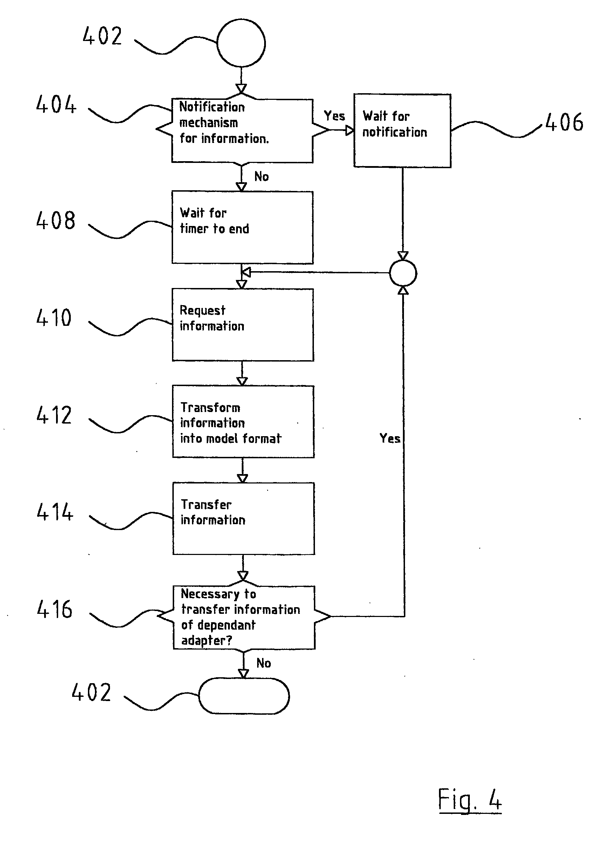

Fig. 4 is a flow diagram illustrating such a request and transfer of data. Staring the program from step 402 that e.g. can correspond to the configuration of the system (step 304 in Fig. 3), a query is issued at step 404 regarding whether a timer has been installed (active monitoring) or whether passive monitoring should be implemented. If passive monitoring has been installed, program step 406 is executed and the system waits for a notification of the respective data of the respective database. If active monitoring has been set up, program step 404 branches to program step 408, the timer is initialised and the process waits until the timer has run out.

After notification has been received or the timer has expired, program step 410 is executed. The information from the respective database is requested. Then the information is transformed into the internal model format according to program step 412 and saved. If it is possible to transfer the information to the respective receiver, the information is sent to it in step 414. If additional information is linked to the request4ed information, the loop consisting of program steps 410 to 414 and 416 is run until all information has been requested. Then the procedure branches to step 408 or 406 depending on the selected type of monitoring (active or passive).

The program steps in Fig. 4 can be identical for all the data such as user data, structural information or form information.

The branching in program step 416 (where the process checks whether dependent information must be extracted from or sent to other databases according to set rules) depends on the established profiles and rules. Using the metadata, these rules define the relationship between two information types. Dependent information units are determined by the value of a field. All information units of the adapter that are defined as dependent and which contain the same values for a specific field are requested or extracted and transferred according to the above-described procedure.

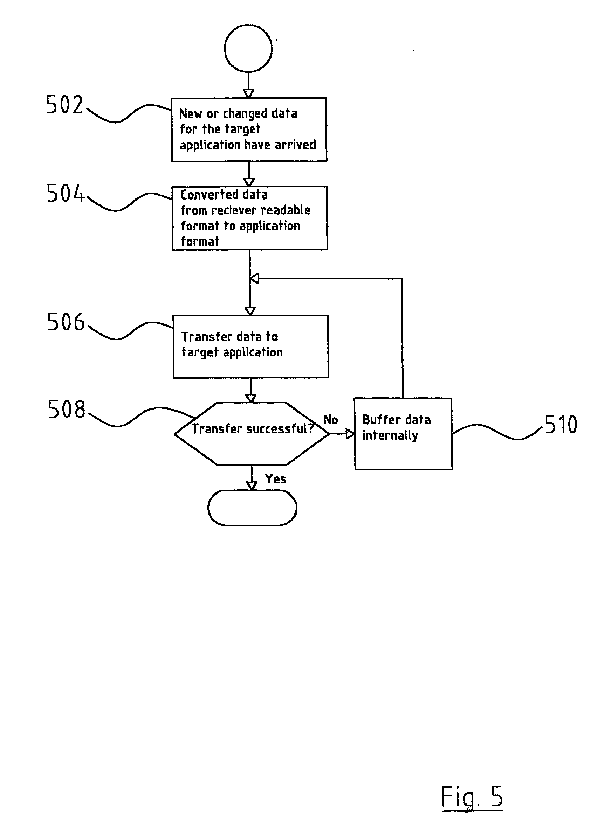

Fig. 5 shows the return of information from a client application to the respective database. At step 502, new or changed information is transferred from the client application to the system. The data is then converted from receiver readable format to application format at step 504. By referring to the transferred ID, the adapter can determine the data in the respective database or the target application and correspondingly reenter it, overwrite it or delete it, depending on the status. This is achieved at step 506. At step 508, the server checks to see if the transfer was successful. If the data cannot be transferred directly to the target application or the database, the data is buffered at step 510 by the server on its memory. As soon as the data can be transferred, the respective adapter transfers it and deletes the buffered information from the associated memory depending on the status. The intermediary server may await a "transmission complete" message from the database before deleting the data and this will provide better data integrity as data is never deleted from the sending entity until it has been fully received by the recipient.

The embodiments in the invention described with reference to the drawings comprise computer apparatus and processes performed in computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio of other means.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail.

## Claims

1. A method of handling a data request by exporting data from at least one database to at least one receiver via an intermediary server, the intermediary server comprising at least one database adapter and a memory buffer for temporary storage of data, the method comprising the steps of transmitting the data request to the database and retrieving the requested data from the database **characterised in that** the method further comprises transmitting the data request from the intermediary server; assigning to the data a unique ID number; transmitting the requested data and unique ID number to the intermediary server; passing the requested data through the relevant database adapter to transform the data into receiver readable format and storing the transformed data and unique ID number in the memory buffer; enabling the receiver in accordance with a preset condition precedent; transmitting the transformed data and unique ID number to the receiver when the receiver is next enabled to receive the data on the condition precedent occurring.

2. A method as claimed in claim 1, in which the intermediary server sends data requests to the database at regular intervals, stores the updated data in the memory buffer and transmits the updated data on the condition precedent occurring.

3. A method as claimed in claim 1 or 2, in which on the intermediary server requesting data from a database:
data with a unique ID is compared with the corresponding data in the database;
the data which has been updated Is extracted from the database; and
the extracted data is written to the data in the memory buffer having the unique ID.

4. A method as claimed in claim 3, in which on data having a unique ID in the database is changed, the database sends a signal to the intermediary server and the intermediary server requests the extracted data in accordance with predetermined rules for operation of the intermediary server.

5. A method as claimed in claim 4, in which the predetermined rules are based on one or more of:-
predetermined time intervals;
the data ID;
a request from the receiver; and
type or class of receiver.

6. A method of handling a data request as claimed in any preceding claim, in which the unique ID number identifies the database from which the data came.

7. A method of handling a data request as claimed in any preceding claim, in which the unique ID number contains a destination address.

8. A method of handling a data request as claimed in any preceding claim, in which the condition precedent is based on predetermined time intervals.

9. A method of handling a data request as claimed in any preceding claim in which the data request originates at the receiver before passing through the intermediary server.

10. A method of handling a data request as claimed in any preceding claim, in which the data at the receiver may be altered and retransmitted back to the database with the same unique ID number via the intermediary server.

11. A method of handling a data request as claimed in claim 10, in which the data to be retransmitted back to the database is stored on the memory buffer of the intermediary server until an update request is received from the database.

12. A method of handling a data request as claimed in claim 11, in which the data is retransmitted back to the database at predetermined intervals.

13. A method of handling a data request as claimed in any preceding claim, in which the database will transmit any data that has changed to the intermediary server so that the receivers may receive the updated data when the receiver is next enabled to receive the data.

14. A method of handling a data request as claimed in any preceding claim, in which the data is automatically sent to the intermediary server when the data in the database changes to cause the condition precedent..

15. A method of handling a data request as claimed in any preceding claim, in which the data from more than one database may be linked so that a request for one piece of data will also generate a request for all lined pieces of data.

16. A method of handling a data request as claimed in any preceding claim, in which two or more receivers may be linked into a common group so that data transmitted to one of these receivers will be transmitted to all of those receivers in that group.

17. A method of handling a data request as claimed in claim 16, in which the receivers of a common group are all updated at predetermined intervals.

18. A method of handling a data request as claimed in claim 16 or 17, in which the receivers of a common group are all updated when the data in the database changes.

19. A method of handling a data request as claimed in any preceding claim, in which data that is transferred is not deleted from the transmitting memory until a transmission successful message is received from the recipient.

20. A method of handling a data request as claimed in any preceding claim, in which the data transfers that are unsuccessful will generate a data transfer incomplete message.

21. A computer implemented system for accessing databases (18) operated by independent electronic processing devices comprising:-
(a) a plurality of receivers (16);
(b) an intermediary server (14);
(c) a communications network connecting the processing devices and the server (14) and the receivers (16), at least the receivers (16) and the server (14) being only intermittently connected;
(d) translation means in the server to accept data from the database and convert the accepted data into a format suitable for transmission to the receiver;
(e) means to assign a unique ID to data in a database on accepting data from the database;
(f) a storage buffer (24) for the ID and converted data; and
(g) means on the receiver (16) being enabled to communicate with the server (14), downloading the data and ID to the receiver.

22. A computer implemented system as claimed in claim 21, in which the intermediary server (14) is provided with means to request data from the database (18) at predetermined intervals.

23. A computer implemented system as claimed in claim 21 or 22, in which the receiver (16) is provided with means to request data from the databases at predetermined intervals.

24. A computer implemented system as claimed in any of claims 21 to 23, in which the receiver (16) is provided with means to alter the data and means to retransmit the altered data to the intermediary server (14).

25. A computer program comprising program instructions for causing a computer to perform the method of any of claims 1 to 21.

26. A computer program as claimed in claim 25 embodied on a record medium.

27. A computer program as claimed in claim 25 embodied on a carrier signal.

28. A computer program as claimed in claim 25, embodied on a read-only memory.
